(19) Europäisches Patentamt

European Patent Office

Office européen des brevets

(11) EP 0 652 544 B1

(12) FASCICULE DE BREVET EUROPEEN

(45) Date de publication et mention
de la délivrance du brevet:
**30.09.1998 Bulletin 1998/40**

(51) Int Cl.⁶: **G08G 5/04**

(21) Numéro de dépôt: **94402329.0**

(22) Date de dépôt: **18.10.1994**

(54) **Procédé et dispositif d'aide au pilotage d'un aéronef**

Verfahren und Einrichtung zur Steuerungshilfe eines Flugzeuges

Method and device for aiding piloting of an aircraft

(84) Etats contractants désignés:
**DE GB IT**

(30) Priorité: **10.11.1993 FR 9313428**

(43) Date de publication de la demande:
**10.05.1995 Bulletin 1995/19**

(73) Titulaire: **EUROCOPTER**
**F-13725 Marignane Cédex (FR)**

(72) Inventeur: **D'Orso, Michel**
**13080 Luynes (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 464 263**      **DE-A- 2 643 526**
**DE-A- 3 501 954**

## Description

La présente invention telle qu'elle est définie dans les revendications concerne un procédé et un dispositif d'aide au pilotage d'un aéronef, permettant en particulier de déterminer les obstacles dangereux pour ledit aéronef dans son espace de vol.

Le document EP-A-0 464 263 divulgue un dispositif de détection d'obstacles pour aéronefs.

En vol à basse altitude, le pilote d'un aéronef, en particulier d'un hélicoptère, voit devant lui, sous des angles d'incidences faibles, un très grand nombre de points du sol ou d'obstacles qu'il situe généralement bien en direction mais pas toujours en distance.

Le traitement intellectuel de cet ensemble de points mal situés représente souvent une charge de travail lourde et difficile, d'autant plus qu'il peut y avoir une mauvaise visibilité et des obstacles trop fins pour être distingués de loin.

Ces inconvénients sont particulièrement sensibles lorsque le pilote utilise des dispositifs de vision de nuit ou des caméras qui donnent dans un champ réduit une image sans couleur, ni relief.

La présente invention a pour objet de remédier à ces inconvénients. Elle concerne un procédé d'aide au pilotage d'un aéronef, en particulier pour des vols à basse altitude, permettant de détecter les obstacles dangereux pour ledit aéronef.

A cet effet, selon l'invention, le procédé d'aide au pilotage d'un aéronef à basse altitude, permettant de détecter les obstacles en relief, dangereux pour ledit aéronef dans le champ avant de celui-ci, est remarquable en ce que :

- à partir des possibilités de manoeuvre de l'aéronef, on calcule une courbe fictive liée audit aéronef et associée à une trajectoire théorique optimale de franchissement d'un obstacle dans un plan vertical ; et
- dans le champ avant de l'aéronef, on effectue les étapes suivantes :

a) on détermine tous les obstacles situés dans une zone de recherche ;
b) on compare les sommets desdits obstacles déterminés à ladite courbe fictive ;
c) on définit, comme obstacle dangereux, l'obstacle dont le sommet est situé le plus haut par rapport à ladite courbe fictive ; et
d) on communique les coordonnées dudit sommet de cet obstacle dangereux.

Ainsi, grâce à l'invention, on est en mesure d'identifier, parmi tous les obstacles potentiels, visibles ou non pour le pilote, l'obstacle présentant un danger immédiat et devant entraîner, s'il se trouve sur la trajectoire de l'aéronef, une manoeuvre d'évitement immédiate de la part du pilote.

Par ailleurs, cette réduction du nombre d'obstacles à prendre en compte facilite considérablement le travail d'observation du pilote.

De façon avantageuse, le champ avant de l'aéronef est subdivisé en secteurs angulaires et, dans chacun desdits secteurs angulaires, on effectue lesdites étapes a, b, c et d. Ainsi, le pilote dispose non seulement d'une aide à l'évitement vertical, dans une direction déterminée, mais également d'une aide pour l'évitement latéral, à partir des informations obtenues de chacun desdits secteurs angulaires.

En outre, avantageusement, dans chacun desdits secteurs angulaires, on calcule les coordonnées d'un point de référence situé à une distance prédéfinie au-dessus du sommet de l'obstacle dangereux, ladite distance prédéfinie correspondant à la hauteur minimale souhaitée de survol d'un obstacle.

Ainsi, en présentant ledit point de référence au pilote, on lui indique le point de l'espace par lequel il doit passer pour effectuer le survol le plus avantageux de l'obstacle dangereux, c'est-à-dire le plus bas et ne présentant aucun risque de collision. Evidemment, ladite hauteur minimale de survol est adaptée aux caractéristiques de l'aéronef et au type de mission à effectuer. A titre d'exemple, une hauteur de 20 mètres peut être envisagée pour un hélicoptère.

Afin de présenter le plus efficacement possible les résultats précédents au pilote de l'aéronef, on superpose à l'image du paysage extérieur des signes caractéristiques agencés aux points de l'espace correspondant auxdites coordonnées déterminées.

Ainsi, lorsque ces coordonnées sont celles des points de référence, le pilote voit directement le point de l'espace par lequel il doit passer pour effectuer un survol optimal. Lorsque ces coordonnées sont celles des sommets des obstacles dangereux, cette superposition permet de mettre en évidence ces obstacles dangereux qui ne sont pas toujours bien visibles directement et dont la facilité de reconnaissance varie souvent avec les conditions météorologiques. Cette superposition offre, par conséquent, au pilote une aide efficace à l'observation, en facilitant, surtout dans des conditions de mauvaise visibilité, la reconnaissance des obstacles dangereux.

De façon avantageuse, on détermine une courbe de pilotage correspondant à une courbe lissée reliant tous lesdits points de référence et on superpose à l'image du paysage extérieur ladite courbe de pilotage, ainsi qu'un signe caractéristique indiquant la position du vecteur vitesse de l'aéronef collimaté à l'infini.

Cette courbe de pilotage divise donc l'image du paysage extérieur en deux parties, une partie inférieure qui est comprise entre le sol et ladite courbe de pilotage et que l'aéronef doit éviter à tout prix, en raison de la présence desdits obstacles dangereux, et une partie supérieure qui est située au-dessus de ladite courbe de pilotage et qui ne comporte aucun obstacle dangereux. On remarquera, de plus, que, pour effectuer un vol à la fois le plus bas possible et sans danger pour l'aéronef, il suffit que le pilote dirige l'aéronef vers un point de ladite courbe de pilotage puisque, par définition, cette courbe de pilotage relie entre eux les points de référence qui sont définis, tel que décrit précédemment, en tenant compte de la hauteur minimale de survol d'un obstacle.

Par conséquent, pour effectuer un survol optimal, il suffit au pilote de diriger l'aéronef de manière à superposer, à ladite courbe de pilotage, ledit signe caractéristique du vecteur vitesse, qui indique évidemment la direction de vol de l'aéronef.

Grâce à l'invention, on est ainsi en mesure d'effectuer un guidage directif par superposition du vecteur vitesse et de la courbe de pilotage.

On notera, par ailleurs, que ladite courbe de pilotage fournit implicitement une indication de distance, car l'écart angulaire entre le sommet d'un obstacle et la courbe de pilotage est proportionnel à la distance entre cet obstacle et l'aéronef.

Afin de ne pas surcharger l'image du paysage extérieur, transmise au pilote, on ne superpose à ladite image du paysage, de façon avantageuse, que la partie centrale de ladite courbe de pilotage comportant les points de l'espace accessibles à l'aéronef avec un roulis limite prédéfini. Ceci permet alors, de plus, d'indiquer clairement au pilote la partie de l'espace qu'il est susceptible d'atteindre à partir de sa position actuelle. En outre, la présence permanente de l'ensemble de cette partie accessible de la courbe de pilotage permet au pilote une vérification de la cohérence de ladite courbe de pilotage avec les obstacles réels vus. On remarquera que la valeur dudit roulis limite dépend, en particulier, du type d'aéronef considéré. Pour un hélicoptère, on peut, par exemple, utiliser une valeur de 45°.

On notera que le pilotage, par superposition du vecteur vitesse et de la courbe de pilotage, ne permet pas toujours de passer exactement à l'horizontale, à la hauteur minimale de survol, au-dessus de l'obstacle considéré. Afin de remédier à cet inconvénient, en permettant à l'aéronef d'atteindre plus rapidement la hauteur recherchée pour se mettre en position horizontale avant le survol, on peut le guider à l'aide d'une courbe de pilotage décalée vers l'aéronef, déterminée de manière identique à ladite courbe de pilotage, en utilisant dans le calcul des coordonnées modifiées des obstacles dangereux, obtenues à chaque fois par la réduction suivant un même rapport, par exemple un quart, de la composante horizontale desdites coordonnées.

Par ailleurs, de façon avantageuse, on calcule une courbe de pilotage auxiliaire, déterminée de manière identique à ladite courbe de pilotage, en tenant compte des obstacles situés à une distance plus importante de l'aéronef que lesdits obstacles dangereux, et on superpose ladite courbe de pilotage auxiliaire à l'image du paysage extérieur, par exemple par l'intermédiaire d'un tracé en pointillés, afin de la différencier de ladite courbe de pilotage. Cette courbe de pilotage auxiliaire permet de mettre en évidence les obstacles qui sont situés plus loin que les obstacles dangereux de la courbe de pilotage et qui seront à prendre en compte après le franchissement desdits obstacles dangereux. Ces informations peuvent, en particulier, aider le pilote dans le choix d'un éventuel déroutement latéral.

Il est également possible d'utiliser différemment ladite courbe de pilotage auxiliaire, sans la superposer à l'image. On peut, par exemple, utiliser les informations fournies par ladite courbe de pilotage auxiliaire pour différencier certaines parties de la courbe de pilotage, en indiquant au pilote les directions à éviter, c'est-à-dire celles où la courbe de pilotage auxiliaire est élevée, et les directions à rechercher, c'est-à-dire celles où la courbe de pilotage auxiliaire est basse. Cette différenciation peut être obtenue par des épaisseurs différentes du tracé de la courbe de pilotage, par l'utilisation de pointillés ou de couleurs.

Avantageusement, on détermine un point d'évitement optimal, correspondant au point de la courbe de pilotage vers lequel doit se diriger l'aéronef pour effectuer la trajectoire d'évitement optimale au-dessus des obstacles.

Selon l'invention, pour déterminer ledit point d'évitement optimal :

- on calcule, pour chaque point de référence de la courbe de pilotage, une distance relative compensée D vérifiant la relation $D = h+kv$, $\underline{h}$ étant la distance horizontale et $\underline{v}$ la distance verticale entre ledit point de référence et la position du vecteur vitesse, et $\underline{k}$ étant un coefficient prédéfini ;
- on compare, entre elles, lesdites distances relatives compensées calculées ; et
- on détermine comme point d'évitement optimal, le point de référence dont la distance relative compensée est la plus faible.

Parfois, il peut être suffisant, pour la détermination du point d'évitement optimal, de se limiter aux points de référence de trois secteurs angulaires, à savoir le secteur angulaire central en face de l'aéronef, dans lequel se trouve le vecteur vitesse, ainsi que les secteurs angulaires adjacents situés respectivement à droite et à gauche de ce secteur angulaire central.

Ledit point d'évitement optimal peut être utilisé de deux manières différentes. D'une part, on peut superposer à l'image du paysage extérieur un signe caractéristique agencé audit point d'évitement optimal. Ainsi, pour effectuer un évitement optimal, il suffit de faire correspondre le signe caractéristique du vecteur vitesse avec ledit signe caractéristique du point d'évitement optimal. D'autre part, on peut communiquer les coordonnées dudit point d'évitement optimal au pilote automatique de l'aéronef, pour effectuer un évitement automatique.

Par ailleurs, on superpose, à l'image du paysage extérieur, un signe caractéristique agencé au point de ladite courbe de pilotage, par lequel passera ledit aéronef en maintenant son roulis actuel.

De façon avantageuse, ladite courbe fictive est constituée d'une partie rectiligne, de longueur P, parallèle au vecteur vitesse de l'aéronef et d'un arc de cercle, de rayon R, dépendant des possibilités de manoeuvre de l'aéronef, pour cabrer et piquer, dans le plan vertical.

De préférence, la longueur P de la partie rectiligne de ladite courbe fictive est proportionnelle à la vitesse de l'aéronef, ce qui permet d'obtenir une durée (durée de préavis) nécessaire à l'aéronef pour parcourir la distance P, qui est fixe quelle que soit la vitesse de l'aéronef. Cette durée fixe de préavis, par exemple 3 secondes ou 5 secondes pour un hélicoptère, correspond à la durée maximale laissée à la disposition du pilote pour commencer une manoeuvre d'évitement, après avoir eu connaissance de l'ordre d'évitement d'un obstacle dangereux.

Par ailleurs, le rayon R dudit arc de cercle vérifie la relation R = Rc+Rp, avec Rc le rayon limite à cabrer, dépendant du facteur de charge limite à cabrer, et Rp le rayon limite à piquer, dépendant du facteur de charge limite à piquer.

On remarquera que le facteur de charge limite à piquer est généralement déterminé en tenant compte de considérations relatives au confort du pilote, car les possibilités de l'aéronef en facteur de charge vers le bas sont peu réduites en fonction de la masse, de la température ou de la pression atmosphérique. Une valeur généralement admise par les pilotes est 0,6 g, $g$ étant l'accélération de la pesanteur.

Au contraire, le facteur de charge limite à cabrer pouvant être pris par l'aéronef dépend très sensiblement des paramètres cités précédemment, à savoir la masse, la température et la pression, ainsi que de la vitesse et des attitudes de l'aéronef.

De plus, la courbe de pilotage étant élaborée par le calcul de plusieurs points, on peut soit prendre la même valeur pour le calcul en chaque point de cette courbe de pilotage, soit prendre une valeur différente tenant compte du fait que l'aéronef doit prendre du roulis pour atteindre les points de la courbe de pilotage qui ne sont pas juste en face de lui et que, donc, cette prise de roulis réduit le facteur de charge limite qu'il est capable de prendre.

Dans le cadre de la présente invention, on peut donc déterminer de différentes façons possibles ledit facteur de charge limite à cabrer utilisé pour le calcul du rayon limite à cabrer Rc. Par exemple, on peut prendre une valeur fixe que l'aéronef est susceptible de tenir dans tout le domaine de vol, ou on peut prendre des valeurs prédéfinies variant en fonction de la vitesse de l'aéronef. Selon une autre possibilité, on peut déterminer ledit facteur de charge limite à cabrer, directement à partir de la température, de la pression, de la masse et de la vitesse de l'aéronef.

De façon avantageuse, dans chaque secteur angulaire, ladite zone de recherche est limitée à une distance L de l'aéronef, vérifiant la relation L = P+R, ce qui évite de tenir compte d'obstacles qui ne peuvent être définis comme obstacles dangereux, puisqu'ils se trouvent hors de portée de ladite courbe fictive, de longueur L, liée à l'aéronef.

Pour la mise en oeuvre du procédé conforme à la présente invention, on prévoit un dispositif comportant :

- un capteur télémétrique destiné à mesurer la direction et la distance de tous les obstacles situés dans lesdites zones de recherche ;
- un calculateur relié audit capteur télémétrique, calculant ladite courbe fictive à partir de données enregistrées, définissant les obstacles dangereux, et susceptible de calculer les coordonnées des points de référence et ladite courbe de pilotage ; et
- un dispositif de visualisation relié audit calculateur et susceptible de présenter au pilote de l'aéronef, de façon superposée au paysage extérieur ou à l'image de celui-ci, les signes caractéristiques desdites coordonnées, ladite courbe de pilotage, ainsi que le signe caractéristique indiquant la position du vecteur vitesse.

De façon avantageuse, ledit dispositif comporte une alarme sonore, qui est associée à une base de temps, qui est reliée audit dispositif de visualisation et qui est déclenchée lorsque ledit vecteur vitesse se trouve au-dessous de ladite courbe de pilotage depuis une durée prédéfinie, par exemple la moitié de la durée de préavis.

Par ailleurs, ledit dispositif de visualisation filtre les variations de la courbe de pilotage et présente au pilote, de façon progressive, les modifications de ladite courbe de pilotage, ce qui permet d'éviter des sauts brusques de la courbe de pilotage susceptibles de troubler ou de fatiguer inutilement le pilote.

Les figures du dessin annexé feront bien comprendre comment l'invention peut être réalisée. Sur ces figures, des références identiques désignent des éléments semblables.

Les figures 1A, 1B et 1C illustrent l'élaboration d'une courbe fictive associée à une trajectoire optimale de franchissement d'un obstacle.

La figure 2 illustre, de façon schématique, la division du champ avant de l'aéronef en secteurs angulaires.

La figure 3 montre un mode de présentation de résultats par superposition à l'image du paysage extérieur.

La figure 4 montre un autre mode de présentation de résultats, également par superposition à l'image du paysage extérieur.

La figure 5 illustre la détermination de la partie utile d'une courbe de pilotage.

La figure 6 est le schéma synoptique d'un dispositif conforme à la présente invention.

La présente invention est destinée à aider le pilote d'un aéronef, en particulier d'un hélicoptère, à maintenir dans un environnement dangereux une trajectoire la plus basse possible, en indiquant audit pilote les obstacles dangereux pour ledit aéronef dans son espace de vol.

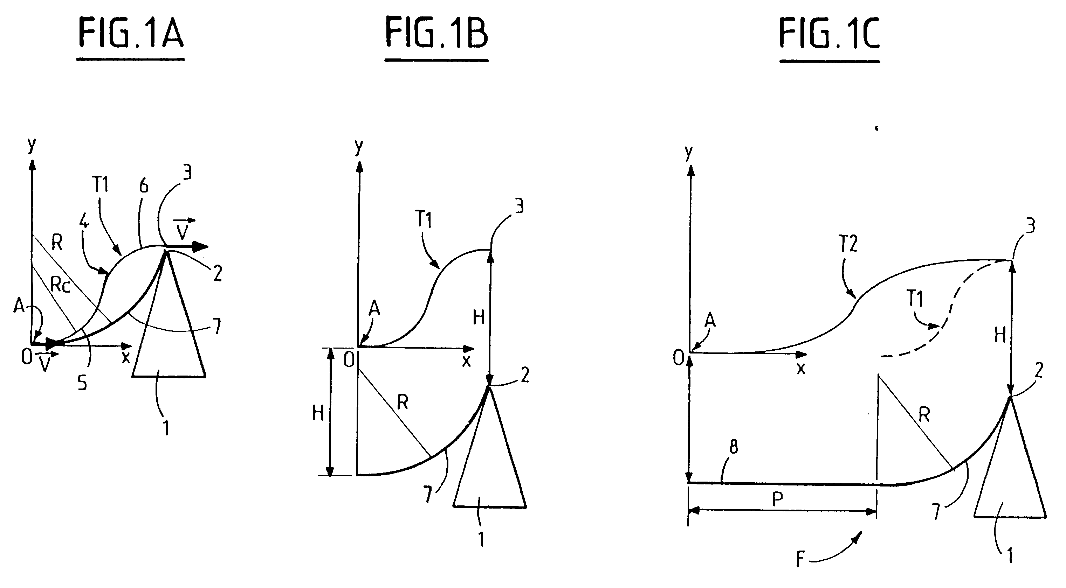

Pour la détermination de ces obstacles dangereux, on utilise une courbe fictive F liée à l'aéronef A, dont on explique ci-après, en référence aux figures 1A, 1B et 1C, le mode d'élaboration.

Le calcul de cette courbe fictive F est effectué dans un repère (Ox, Oy), l'origine O représentant l'aéronef A assimilé à un point, l'axe Ox étant parallèle au vecteur vitesse $\vec{V}$ de l'aéronef A, de direction horizontale dans l'exemple représenté, et l'axe Oy étant perpendiculaire au vecteur vitesse $\vec{V}$, c'est-à-dire vertical, et dirigé vers le haut dans cet exemple.

Pour franchir un obstacle 1, représenté schématiquement, et passer à l'horizontale, au ras de son sommet 2, c'est-à-dire au niveau d'un point 3 situé légèrement au-dessus dudit sommet 2, l'aéronef A parcourt une trajectoire T1 comportant, d'une part, de la position initiale en O jusqu'à un point 4, un arc de cercle 5 à rayon de courbure Rc et, d'autre part, du point 4 jusqu'au point de survol 3, un arc de cercle 6 à rayon de courbure Rp (non représenté).

Les rayons de courbure Rc et Rp, correspondant respectivement aux rayons limites à cabrer et à piquer, dépendent des possibilités de manoeuvre de l'aéronef A. Ils sont calculés respectivement à partir des facteurs de charge limites à cabrer et à piquer, tel que décrit précédemment.

Le sommet 2, de même que le point 3, se trouve sur un arc de cercle 7, tangent au vecteur vitesse V au point O et présentant un rayon R = Rc+Rp.

La trajectoire T1, telle qu'elle est représentée sur la figure 1A, est la trajectoire de franchissement de l'obstacle 1 sans marge, puisque le point 3 de survol se trouve légèrement au-dessus du sommet 2 de l'obstacle 1. Pour franchir cet obstacle 1 avec une marge verticale H, correspondant par exemple à la hauteur minimale prescrite de survol d'un obstacle, on décale l'arc de cercle 7, d'une distance H vers le bas (par rapport à l'aéronef), c'est-à-dire suivant l'axe Oy, dans le sens des coordonnées négatives, tel que représenté sur la figure 1B.

En outre, pour que le pilote de l'aéronef dispose d'une certaine durée de réaction DR (ou durée de préavis) avant de commencer la manoeuvre de franchissement de l'obstacle 1, on décale l'arc de cercle 7, d'une distance P, vers l'avant, c'est-à-dire suivant l'axe Ox, tel que représenté sur la figure 1C. On notera que, pour avoir une durée de préavis DR fixe, par exemple 3 secondes, quelle que soit la vitesse V de l'aéronef, ladite distance P est définie proportionnelle à cette vitesse V, à partir de la relation P = DR.V.

Dans ces conditions, l'aéronef A effectue une trajectoire de franchissement T2 correspondant à la trajectoire de franchissement optimal d'un obstacle, compte tenu des possibilités de manoeuvre de l'aéronef. Les pentes de cette trajectoire T2 sont plus douces que celles de la trajectoire T1 que l'on a représentée en traits interrompus sur la figure 1C et qui est une trajectoire limite.

On obtient ainsi la courbe fictive F recherchée. Celle-ci est constituée d'une partie rectiligne 8 de longueur P et de l'arc de cercle 7.

Les étapes décrites précédemment pour expliquer le calcul de la courbe fictive F permettent de bien mettre en évidence tout l'intérêt de cette courbe et de montrer ses liens avec la trajectoire théorique T2 de franchissement optimal.

On remarquera que la trajectoire de franchissement d'un obstacle 1 est optimale, c'est-à-dire identique à ladite trajectoire T2, si le franchissement est déclenché au moment même où l'obstacle 1 à franchir touche ladite courbe fictive F.

Dans le repère (Ox, Oy), le cercle (non représenté) qui comporte l'arc de cercle 7 a pour équation :

$$(x - P)^2 + [y - (R\text{-}H)]^2 = R^2,$$

laquelle a pour racine $y = R\text{-}H\text{-}\sqrt{(R^2 - (x\text{-}P)^2)}$.

Par conséquent, dans ledit repère (Ox, Oy), l'équation de la courbe fictive F est :

$$y = - H \qquad \text{pour } 0 < x < P$$

$$y = R - H - \sqrt{(R^2 - (x\text{-}P)^2)} \qquad \text{pour } P < x < P\text{+}R$$

Ladite courbe fictive F est donc limitée à une distance L = P+R du point O.

Cette courbe fictive F est utilisée pour déterminer les obstacles dangereux pour l'aéronef, comme on le verra ci-après.

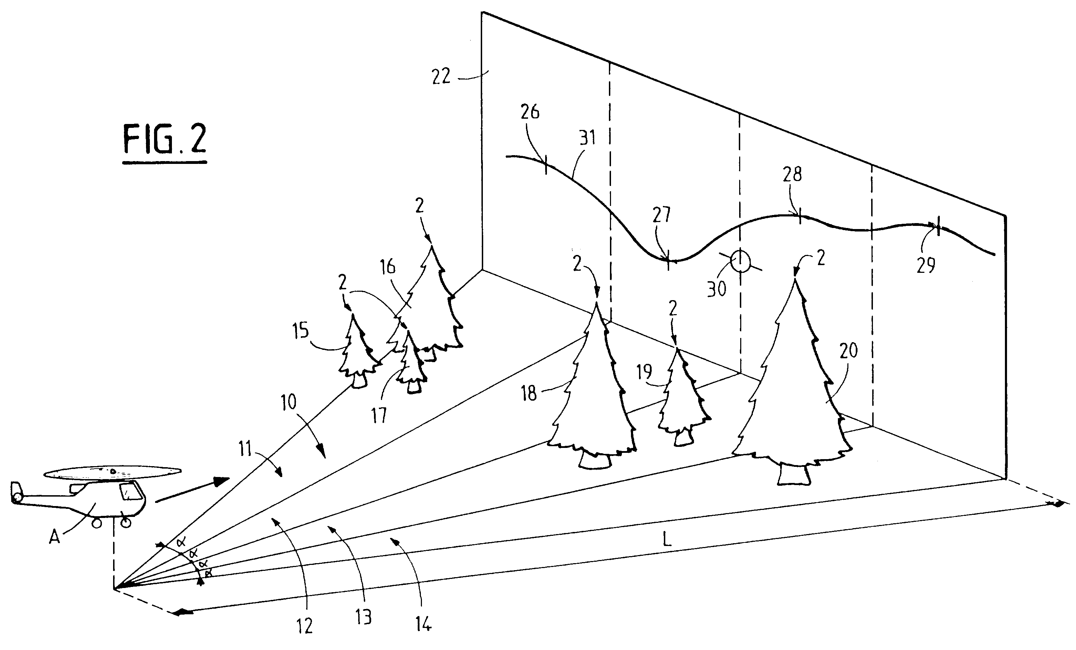

A cet effet, on ne s'intéresse qu'à un champ avant 10 de l'aéronef, tel que représenté sur la figure 2, comportant au moins la partie de l'espace que l'aéronef est susceptible d'atteindre à partir de sa position actuelle, en tenant compte des caractéristiques de ses performances dynamiques. Conformément à l'invention, on divise ledit champ avant 10 en secteurs angulaires 11 à 14, de même ouverture angulaire α.

Dans chacun desdits secteurs angulaires 11 à 14 :

- on détermine tous les obstacles 15 à 20 situés dans une zone de recherche, explicitée ci-après, par exemple par l'intermédiaire d'un détecteur télémétrique ;

- on compare les sommets 2 desdits obstacles déterminés 15 à 20 à ladite courbe fictive F liée à l'aéronef et non représentée sur la figure 2 ;

- on définit comme obstacle dangereux 16, 18 et 20 l'obstacle dont le sommet 2 est situé le plus haut par rapport à ladite courbe fictive F ; et

- on enregistre la position dudit sommet 2 de cet obstacle dangereux 16, 18 et 20.

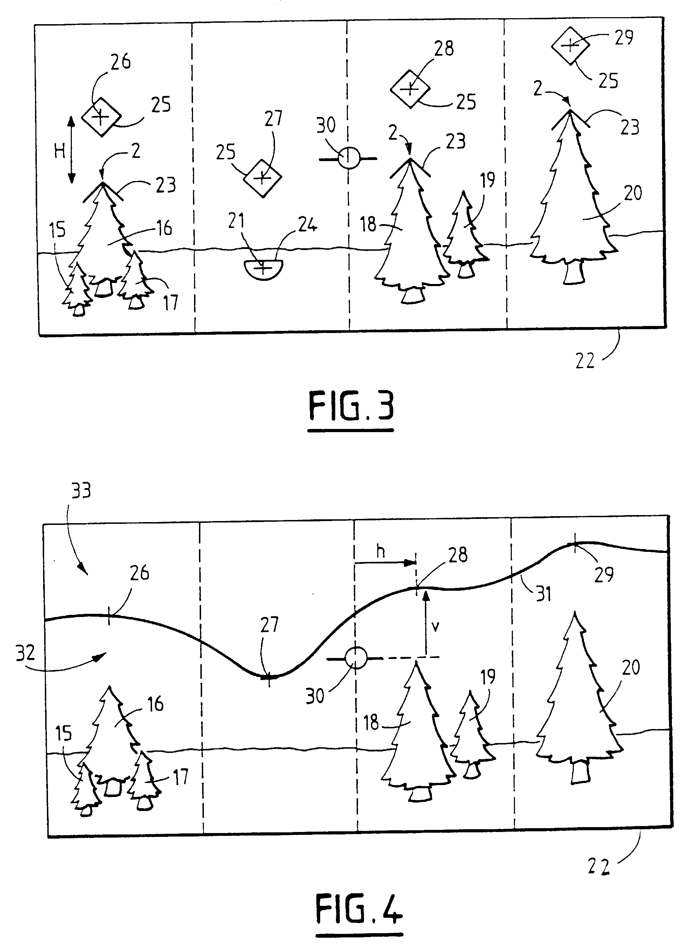

Evidemment, lorsqu'un secteur ne comporte aucun obstacle apparent, comme par exemple le secteur 12, on définit comme obstacle dangereux un point 21 du sol (voir figure 3).

Généralement, on utilise un détecteur télémétrique, comme par exemple un radar, associé à un faisceau laser qui balaie, de façon régulière et systématique, l'espace situé devant ledit détecteur. Ledit détecteur enregistre dans chaque direction, en particulier la distance du sol qui renvoie un écho. Tous les points détectés, comme par exemple des arbres, le sol ou des câbles, dont on connaît ainsi la direction et la distance par rapport à l'aéronef, sont considérés comme des obstacles susceptibles d'être utilisés dans la mise en oeuvre de l'invention.

Selon l'invention, on calcule, par exemple, dans un repère lié à l'aéronef, l'altitude (coordonnée selon $y$, d'après la figure 1) de chaque obstacle. Puis, on calcule la différence d'altitude entre chaque obstacle $y(O)$ et le point correspondant $y(F)$ de la courbe fictive F. L'obstacle défini comme dangereux est celui dont la différence $y(O)-y(F)$ est la plus grande en valeur algébrique, quelle que soit la nature de cet obstacle (arbres, sol, câble, ...).

En outre, comme par définition, la courbe fictive F est limitée à la distance $L = P+R$, lesdites zones de recherche associées aux différents secteurs angulaires 11 à 14 sont de même limitées à une distance L de l'aéronef, puisque les obstacles qui sont situés à une distance plus importante, sont hors de portée de la courbe fictive F et ne peuvent donc être définis comme obstacles dangereux.

Les résultats précédents sont alors présentés au pilote de l'aéronef, par superposition à une image 22 du paysage extérieur, par exemple directement par l'intermédiaire d'un viseur clair ou d'un viseur de casque ou par présentation sur un écran (tête basse ou tête moyenne) en superposition d'une image de caméra (spectre visible ou infrarouge).

Différents modes de présentation sont possibles.

Selon une première possibilité, on superpose à l'image 22 du paysage extérieur des signes caractéristiques, sous forme de réticules 23, agencés aux sommets 2 des obstacles dangereux 16, 18 et 20, tel que représenté sur la figure 3.

Cette solution présente un double avantage. D'une part, elle permet de désigner parmi tous les obstacles existants 15 à 20 ceux qui sont définis comme dangereux et sur lesquels le pilote doit concentrer toute son attention. D'autre part, elle apporte une aide efficace à l'observation, particulièrement utile par mauvaise visibilité, en indiquant au pilote la présence d'obstacles éventuellement non reconnus.

Dans un but de clarification, on peut utiliser un réticule particulier 24 lorsque l'obstacle dangereux concerne un point du sol, comme par-exemple le point 21.

Selon une autre possibilité, on superpose à l'image du paysage extérieur, des signes caractéristiques sous forme de réticules 25 agencés à des points de l'espace 26 à 29 (points de référence) se trouvant à une hauteur déterminée au-dessus des sommets 2 des obstacles dangereux. En utilisant comme hauteur la hauteur minimale prescrite H de survol d'un obstacle, on indique clairement au pilote le point de l'espace par lequel il doit passer pour effectuer un survol optimal, c'est-à-dire le plus bas possible et sans danger de collision.

Pour faciliter une telle manoeuvre, on superpose de plus à l'image 22 du paysage extérieur un réticule 30 indiquant la position du vecteur vitesse de l'aéronef collimaté à l'infini, c'est-à-dire la direction de vol de l'aéronef A. Ainsi, pour effectuer un franchissement optimal d'un obstacle dangereux 16, 18 ou 20, il suffit que le pilote dirige l'aéronef A de manière à superposer le réticule 30 au réticule 25 du point de référence 26, 28 ou 29 associé à cet obstacle dangereux 16, 18 ou 20.

Selon une troisième possibilité de présentation d'informations, on superpose à l'image 22 du paysage extérieur une courbe de pilotage 31 correspondant à une courbe lissée reliant tous les points de référence 26 à 29, tel que représenté sur la figure 4. Cette courbe de pilotage 31 divise l'image 22 du paysage extérieur en deux parties, une partie inférieure 32 que l'aéronef doit éviter, en raison de la présence des obstacles dangereux 16, 18 et 20, et une partie supérieure 33 ne comportant aucun obstacle dangereux. Ainsi, pour effectuer le vol le plus bas possible sans danger de collision, il suffit de piloter l'aéronef A de manière à superposer le réticule 30 du vecteur vitesse à ladite courbe de pilotage 31.

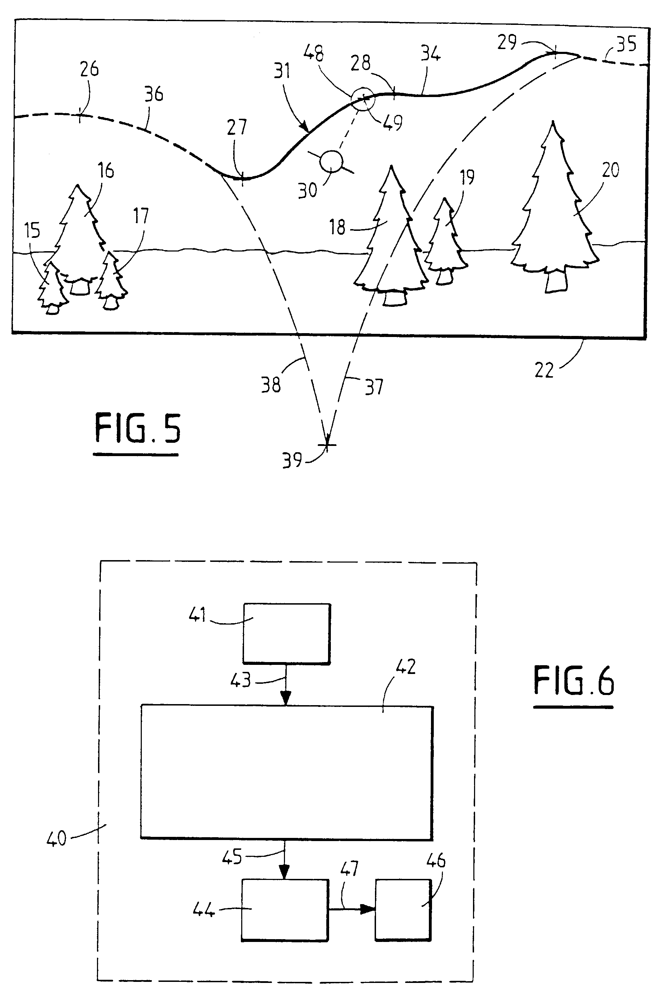

Afin de ne pas surcharger l'image 22 transmise au pilote, on ne représente qu'une partie centrale 34 de ladite courbe de pilotage 31, tel que représenté sur la figure 5, en supprimant les parties latérales 35 et 36 comportant des points de l'espace non accessibles à l'aéronef avec un roulis limite prédéfini. Sur cette figure 5, on a représenté des tracés 37 et 38 en traits interrompus, qui correspondent aux trajectoires fictives à roulis maximum, respectivement vers la droite et vers la gauche, pouvant être effectuées par un aéronef se trouvant en un point 39.

Il est évident que les différents points de ladite partie centrale 34 de la courbe de pilotage 31 sont plus ou moins facilement accessibles à l'aéronef. Pour faciliter le choix du pilote, on détermine un point d'évitement optimal, correspondant au point de la partie centrale 34 vers lequel doit se diriger l'aéronef A pour effectuer la trajectoire d'évitement optimale au-dessus des obstacles.

A cet effet, on effectue les étapes suivantes :

- on calcule, pour chaque point de référence 27 à 29 de la partie centrale 34 de la courbe de pilotage 31, une distance relative compensée D vérifiant la relation $D = h+kv$, $h$ étant la distance horizontale et $v$ la distance verticale entre ledit point de référence 27 à 29 et la position 30 du vecteur vitesse, tel que représenté pour le point de référence 28 sur la figure 4, et $\underline{k}$ étant un coefficient prédéfini ;

- on compare, entre elles, lesdites distances relatives compensées calculées ; et

- on détermine comme point d'évitement optimal le point de référence dont la distance relative compensée est la plus faible.

On choisit le coefficient $\underline{k}$ positif et supérieur à 1, afin de privilégier l'évitement latéral d'un obstacle par rapport au franchissement vertical.

Pour aider le pilote à réaliser une bonne trajectoire, par exemple pour passer entre deux obstacles élevés, on superpose un signe caractéristique, sous forme d'un réticule 48, au point 49 de la courbe de pilotage 31, par lequel passera l'aéronef s'il maintient son roulis actuel, ledit roulis actuel étant indiqué par la position du réticule 30 du vecteur vitesse, tel que représenté sur la figure 5.

Ainsi, par exemple, pour passer entre deux obstacles élevés, il suffit que le pilote dirige l'aéronef de manière à superposer le réticule 48 au point de l'espace et de ladite courbe de pilotage, par lequel il souhaite passer, et qu'il maintienne cette position.

Sur la figure 6, on a représenté un dispositif 40 conforme à l'invention pour mettre en oeuvre le procédé décrit ci-dessus. Ce dispositif 40 comporte :

- un capteur télémétrique 41 destiné à mesurer la direction et la distance de tous les obstacles 15 à 20 situés dans les différentes zones de recherche ;

- un calculateur 42 relié par l'intermédiaire d'une liaison 43 audit capteur télémétrique 41, calculant ladite courbe fictive F à partir de données enregistrées, définissant les obstacles dangereux 16, 18 et 20, et susceptible de calculer les coordonnées des sommets 2 de ces obstacles dangereux, les coordonnées des points de référence 26 à 29 et ladite courbe de pilotage 31 ; et

- un dispositif de visualisation 44 relié audit calculateur 42, par l'intermédiaire d'une liaison 45, et susceptible de présenter au pilote de l'aéronef, de façon superposée au paysage extérieur, lesdits signes caractéristiques 23 et 25, ladite courbe de pilotage 31, ainsi que le réticule 30 indiquant la position du vecteur vitesse.

Par ailleurs, une alarme sonore 46 associée à une base de temps non représentée est reliée audit dispositif de visualisation 44, par l'intermédiaire d'une liaison 47. Cette alarme sonore 46 est déclenchée lorsque le réticule 30 du vecteur vitesse se trouve au-dessous de la courbe de pilotage 31 depuis une durée prédéfinie, avertissant ainsi de l'urgence d'une manoeuvre d'évitement.

**Revendications**

1. Procédé d'aide au pilotage d'un aéronef (A) à basse altitude, permettant de détecter les obstacles en relief, dangereux pour ledit aéronef dans le champ avant (10) de celui-ci,
caractérisé en ce que :

- à partir des possibilités de manoeuvre de l'aéronef, on calcule une courbe fictive (F) liée audit aéronef (A) et associée à une trajectoire théorique optimale (T2) de franchissement d'un obstacle dans un plan vertical ; et
- dans le champ avant (10) de l'aéronef (A), on effectue les étapes suivantes :

   a) on détermine tous les obstacles (15 à 21) situés dans une zone de recherche ;
   b) on compare les sommets (2) desdits obstacles déterminés (15 à 21) à ladite courbe fictive (F) ;
   c) on définit, comme obstacle dangereux (16,18,20,21), l'obstacle dont le sommet (2) est situé le plus haut par rapport à ladite courbe fictive (F) ; et
   d) on communique les coordonnées dudit sommet (2) de cet obstacle dangereux (16,18,20,21).

2. Procédé selon la revendication 1,
caractérisé en ce que le champ avant (10) de l'aéronef est subdivisé en secteurs angulaires (11 à 14) et en ce que, dans chacun desdits secteurs angulaires (11 à 14), on effectue lesdites étapes a, b, c et d.

3. Procédé selon la revendication 2,
caractérisé en ce que, dans chacun desdits secteurs angulaires (11 à 14), on calcule les coordonnées d'un point de référence (26 à 29) situé à une distance prédéfinie (H) au-dessus du sommet (2) de l'obstacle dangereux (16,18, 20,21), ladite distance prédéfinie (H) correspondant à la hauteur minimale souhaitée de survol d'un obstacle.

4. Procédé selon l'une des revendications 1 à 3,
caractérisé en ce que l'on superpose, à l'image (22) du paysage extérieur, des signes caractéristiques (23,25) agencés aux points de l'espace correspondant auxdites coordonnées déterminées.

5. Procédé selon la revendication 3,
caractérisé en ce que l'on détermine une courbe de pilotage (31) correspondant à une courbe lissée reliant tous lesdits points de référence (26 à 29).

6. Procédé selon la revendication 5,
caractérisé en ce que l'on superpose, à l'image (22) du paysage extérieur, ladite courbe de pilotage (31), ainsi qu'un signe caractéristique (30) indiquant la position du vecteur vitesse de l'aéronef (A) collimaté à l'infini.

7. Procédé selon la revendication 5,
caractérisé en ce que l'on superpose, à l'image (22) du paysage extérieur, la partie centrale (34) de ladite courbe de pilotage (31) comportant les points de l'espace accessibles à l'aéronef (A) avec un roulis limite prédéfini.

8. Procédé selon la revendication 5,
caractérisé en ce que l'on calcule une courbe de pilotage décalée, déterminée de manière identique à ladite courbe de pilotage, en utilisant dans le calcul des coordonnées modifiées des obstacles dangereux, obtenues à chaque fois par la réduction suivant un même rapport de la composante horizontale desdites coordonnées.

9. Procédé selon la revendication 5,
caractérisé en ce que l'on calcule une courbe de pilotage auxiliaire, déterminée de manière identique à ladite courbe de pilotage, en tenant compte des obstacles situés à une distance plus importante de l'aéronef que lesdits obstacles dangereux.

10. Procédé selon l'une des revendications 5 à 9,
caractérisé en ce que l'on détermine un point d'évitement optimal, correspondant au point de la courbe de pilotage (31) vers lequel doit se diriger l'aéronef (A) pour effectuer la trajectoire d'évitement optimale au-dessus des obstacles.

11. Procédé selon la revendication 10,
caractérisé en ce que, pour déterminer ledit point d'évitement optimal :

- on calcule, pour chaque point de référence (26 à 29) de la courbe de pilotage (31), une distance relative compensée D vérifiant la relation D $= h+kv$, $\underline{h}$ étant la distance horizontale et $\underline{v}$ la distance verticale entre ledit point de référence (26 à 29) et la position (30) du vecteur vitesse, et $\underline{k}$ étant un coefficient prédéfini ;
- on compare, entre elles, lesdites distances relatives compensées calculées ; et
- on détermine comme point d'évitement optimal, le point de référence dont la distance relative compensée est la plus faible.

12. Procédé selon l'une des revendications 10 ou 11,
caractérisé en ce que l'on superpose, à l'image du paysage extérieur, un signe caractéristique agencé audit point d'évitement optimal.

13. Procédé selon l'une des revendications 10 ou 11,

caractérisé en ce que l'on communique les coordonnées dudit point d'évitement optimal au pilote automatique de l'aéronef, pour effectuer un évitement automatique.

14. Procédé selon l'une des revendications 1 à 13,
caractérisé en ce que ladite courbe fictive (F) est constituée d'une partie rectiligne (8), de longueur P, parallèle au vecteur vitesse ($\vec{V}$) de l'aéronef (A) et d'un arc de cercle (7), de rayon R, dépendant des possibilités de manoeuvre de l'aéronef, pour cabrer et piquer, dans le plan vertical.

15. Procédé selon la revendication 14,
caractérisé en ce que la longueur P de ladite partie rectiligne (8) est proportionnelle à la vitesse (V) de l'aéronef (A).

16. Procédé selon la revendication 14,
caractérisé en ce que le rayon R dudit arc de cercle (7) vérifie la relation R = Rc+Rp, avec Rc le rayon limite à cabrer, dépendant du facteur de charge limite à cabrer, et Rp le rayon limite à piquer, dépendant du facteur de charge limite à piquer.

17. Procédé selon la revendication 16,
caractérisé en ce que, pour facteur de charge limite à cabrer, on prend une valeur fixe que l'aéronef est susceptible de tenir dans tout le domaine de vol.

18. Procédé selon la revendication 16,
caractérisé en ce que, pour facteur de charge limite à cabrer, on prend des valeurs prédéfinies variant en fonction de la vitesse de l'aéronef.

19. Procédé selon la revendication 16,
caractérisé en ce que l'on détermine ledit facteur de charge limite à cabrer, à partir de la température, de la pression, de la masse et de la vitesse de l'aéronef.

20. Procédé selon la revendication 14,
caractérisé en ce que, dans chaque secteur angulaire, ladite zone de recherche est limitée à une distance L de l'aéronef, vérifiant la relation L = P+R.

21. Procédé selon l'une des revendications 5 à 7,
caractérisé en ce que l'on superpose, à l'image (22) du paysage extérieur, un signe caractéristique (48) agencé au point (49) de ladite courbe de pilotage (31), par lequel passera ledit aéronef en maintenant son roulis actuel.

22. Dispositif pour la mise en oeuvre du procédé spécifié sous l'une des revendications 1 à 21,
caractérisé en ce qu'il comporte :

- un capteur télémétrique (41) destiné à mesurer la direction et la distance de tous les obstacles (15 à 20) situés dans les différentes zones de recherche ;

- un calculateur (42) relié audit capteur télémétrique (41), calculant ladite courbe fictive (F) à partir de données enregistrées, définissant les obstacles dangereux (16,18,20,21), et susceptible de calculer les coordonnées des sommets (2) de ces obstacles dangereux (16,18,20,21), les coordonnées des points de référence (26 à 29) et ladite courbe de pilotage (31) ; et

- un dispositif de visualisation (44) relié audit calculateur (42) susceptible de présenter au pilote de l'aéronef (A), de façon superposée au paysage extérieur ou à l'image de celui-ci, les signes caractéristiques (23,25) desdites coordonnées, ladite courbe de pilotage (31), ainsi que le signe caractéristique (30) indiquant la position du vecteur vitesse.

23. Dispositif selon la revendication 22,
caractérisé en ce qu'il comporte une alarme sonore (46), qui est associée à une base de temps, qui est reliée audit dispositif de visualisation (44) et qui est déclenchée lorsque ledit vecteur vitesse se trouve au-dessous de ladite courbe de pilotage depuis une durée prédéfinie.

24. Dispositif selon l'une des revendications 22 ou 23,
caractérisé en ce que ledit dispositif de visualisation (44) filtre les variations de la courbe de pilotage (31) et présente au pilote, de façon progressive, les modifications de ladite courbe de pilotage (31).

## Patentansprüche

1. Verfahren zur Steuerungshilfe eines Flugzeugs (A) bei niedriger Flughöhe, durch das sich die Umrisse von für das Flugzeug gefährlichen Hindernissen im Bereich vor diesem (10) aufspüren lassen, dadurch gekennzeichnet, daß:

- ausgehend von den Manövriermöglichkeiten des Flugzeugs eine fiktive Kurve (F) berechnet wird, die mit dem Flugzeug (A) verbunden wird und mit einer theoretisch optimalen Flugbahn (T2) zum Überschreiten des gefährlichen Hindernisses in einer vertikalen Ebene vereinigt ist und

- im Bereich (10) vor dem Flugzeug (A) folgende Schritte ausgeführt werden:

     a) es werden alle Hindernisse bestimmt (15 bis 21), die in einer Suchzone liegen;

     b) es werden die höchsten Punkte (2) dieser bestimmten Hindernisse (15 bis 21) mit der fiktiven Kurve (F) verglichen;

     c) es wird als gefährliches Hindernis (16, 18, 20, 21) das Hindernis bestimmt, dessen höchster Punkt (2) im Vergleich zur fiktiven Kurve (F) höher liegt; und

     d) es werden die Koordinaten des höchsten Punktes (2) dieses gefährlichen Hindernisses (16, 18, 20, 21) mitgeteilt.

2. Verfahren gemäß Anspruch 1, dadurch gekennzeichnet, daß der Bereich (10) vor dem Flugzeug in Winkelabschnitte (11 bis 14) aufgeteilt wird und daß in jedem der Winkelabschnitte (11 bis 14) die Schritte a, b, c und d durchgeführt werden.

3. Verfahren gemäß Anspruch 2, dadurch gekennzeichnet, daß in jedem der Winkelabschnitte (11 bis 14) die Koordinaten eines Referenzpunktes (26 bis 29) berechnet werden, der in einem vorbestimmten Abstand (H) über dem höchsten Punkt (2) des gefährlichen Hindernisses (16, 18, 20, 21) liegt, wobei der vorbestimmte Abstand (H) der für das Überfliegen eines Hindernisses gewünschten Mindesthöhe entspricht.

4. Verfahren gemäß einem der Ansprüche 1 bis 3, dadurch gekennzeichnet, daß auf das Bild der Außenlandschaft (22) charakteristische Zeichen (23, 25) überlagert werden, die auf den Raumpunkten angeordnet sind, die den ermittelten Koordinaten entsprechen.

5. Verfahren gemäß Anspruch 3, dadurch gekennzeichnet, daß eine Navigationskurve (31) ermittelt wird, die einer geglätteten Kurve entspricht, die alle Referenzpunkte (26 bis 29) verbindet.

6. Verfahren gemäß Anspruch 5, dadurch gekennzeichnet, daß auf das Bild der Außenlandschaft (22) die Navigationskurve (31) sowie ein charakteristisches Zeichen (30) überlagert wird, das die Position des auf unendlich gerichteten Geschwindigkeitsvektors des Flugzeugs (A) angibt.

7. Verfahren gemäß Anspruch 5, dadurch gekennzeichnet, daß auf das Bild der Außenlandschaft (22) der Mittelabschnitt (34) der Navigationskurve (31) überlagert wird, der aus Raumpunkten besteht, die das Flugzeug (A) mit einer begrenzten vorbestimmten Rollbewegung erreichen kann.

8. Verfahren gemäß Anspruch 5, dadurch gekennzeichnet, daß eine verschobene Navigationskurve berechnet wird, die auf gleiche Weise wie die Navigationskurve bestimmt wird, wobei für die Berechnung modifizierter Koordinaten der gefährlichen Hindernisse verwendet werden, die sich jedesmal durch Verringerung der horizontalen Komponente dieser Koordinaten nach einer gleichen Beziehung ergeben.

9. Verfahren gemäß Anspruch 5, dadurch gekennzeichnet, daß eine Hilfsnavigationskurve berechnet wird, die auf gleiche Weise wie die Navigationskurve ermittelt wird, indem die Hindernisse berücksichtigt werden, die vom Flugzeug weiter entfernt sind als die gefährlichen Hindernisse.

10. Verfahren gemäß einem der Ansprüche 5 bis 9, dadurch gekennzeichnet, daß ein optimaler Ausweichpunkt bestimmt wird, der dem Punkt der Navigationskurve (31) entspricht, den das Flugzeug (A) anfliegen muß, um eine optimale Ausweichflugbahn über die Hindernisse hinweg auszuführen.

11. Verfahren gemäß Anspruch 10, dadurch gekennzeichnet, daß, um den optimalen Ausweichpunkt zu ermitteln:

   - für jeden Referenzpunkt (26 bis 29) der Navigationskurve (31) ein relativer, kompensierter Abstand D berechnet wird, wobei die Funktion $D = h+kv$ erfüllt wird, $h$ der horizontale und $v$ der vertikale Abstand zwischen dem Referenzpunkt (26 bis 29) und der Position (30) des Geschwindigkeitsvektors und $k$ ein vorherbestimmter Koeffizient ist;

   - man unter ihnen die berechneten relativen, kompensierten Abstände vergleicht; und

   - als optimaler Ausweichpunkt der Referenzpunkt bestimmt wird, dessen relativer, kompensierter Abstand der geringste ist.

12. Verfahren gemäß einem der Ansprüche 10 oder 11, dadurch gekennzeichnet, daß auf das Bild der Außenlandschaft ein charakteristisches Zeichen überlagert wird, das im optimalen Ausweichpunkt angeordnet ist.

13. Verfahren gemäß einem der Ansprüche 10 oder 11, dadurch gekennzeichnet, daß die Koordinaten des optimalen Ausweichpunktes an den Autopiloten des Flugzeugs übermittelt werden, um ein automatisches Ausweichen zu bewirken.

14. Verfahren gemäß einem der Ansprüche 1 bis 13, dadurch gekennzeichnet, daß die fiktive Kurve (F) aus einem geradlinigen Abschnitt (8) der Länge P besteht, parallel zum Geschwindigkeitsvektor (V) des Flugzeugs (A) und aus einem Kreisbogen (7) mit dem Radius R, der von den Manövrierfähigkeiten des Flugzeugs, in der vertikalen Ebene zu steigen und herunterzugehen, abhängt.

15. Verfahren gemäß Anspruch 14, dadurch gekennzeichnet, daß die Länge P des geradlinigen Teils (8) proportional zur Geschwindigkeit (V) des Flugzeugs (A) ist.

16. Verfahren gemäß Anspruch 14, dadurch gekennzeichnet, daß der Radius R des Kreisbogens (7) die Funktion $R = Rc+Rp$ erfüllt, mit Rc als Grenzradius für das Steigen, der vom Grenzbelastungswert für das Steigen abhängt, und Rp, dem Grenzradius für das Heruntergehen, der vom Grenzbelastungswert für das Heruntergehen abhängt.

17. Verfahren gemäß Anspruch 16, dadurch gekennzeichnet, daß als Grenzbelastungswert für das Steigen ein fester Wert genommen wird, den das Flugzeug in allen Flugbereichen aushalten kann.

18. Verfahren gemäß Anspruch 16, dadurch gekennzeichnet, daß als Grenzbelastungswert für das Steigen vorbestimmte Werte genommen werden, die sich als Funktion der Geschwindigkeit des Flugzeugs verändern.

19. Verfahren gemäß Anspruch 16, dadurch gekennzeichnet, daß der Grenzbelastungswert für das Steigen ausgehend von Temperatur, Druck, Masse und Geschwindigkeit des Flugzeugs bestimmt wird.

20. Verfahren gemäß Anspruch 14, dadurch gekennzeichnet, daß in jedem Winkelabschnitt die Suchzone auf eine Entfernung L vom Flugzeug beschränkt ist, wobei die Funktion $L = P+R$ erfüllt wird.

21. Verfahren gemäß einem der Ansprüche 5 bis 7, dadurch gekennzeichnet, daß auf das Bild (22) der Außenlandschaft ein charakteristisches Zeichen (48) überlagert wird, das in dem Punkt (49) der Navigationskurve (31) angeordnet ist, den das Flugzeug mit seiner gegenwärtigen Rollbewegung durchfliegt.

22. Vorrichtung zur Ausführung des Verfahrens nach einem der Ansprüche 1 bis 21 dadurch gekennzeichnet, daß sie umfaßt:

   - einen telemetrischen Aufnehmer, der dafür bestimmt ist, Richtung und Entfernung aller Hindernisse (15 bis 20) zu messen, die in den unterschiedlichen Suchzonen liegen;

   - einen Rechner (42), der mit dem telemetrischen Aufnehmer (41) verbunden ist, und der aus den registrierten Daten die fiktive Kurve (F) berechnet, die die gefährlichen Hindernisse (16, 18, 20, 21) genau bestimmt und dafür ausgelegt ist, die Koordinaten der höchsten Punkte (2) dieser gefährlichen Hindernisse (16, 18, 20, 21), die Koordinaten der Referenzpunkte (26 bis 29) und die Navigationskurve (31) zu berechnen; sowie

- ein Sichtgerät (44), das mit dem Rechner (42) verbunden ist und dafür ausgelegt ist, dem Piloten des Flugzeugs (A) durch Überlagerung auf die Außenlandschaft oder deren Bild, die charakteristischen Zeichen (23, 25) der Koordinaten, die Navigationskurve (31) sowie das charakteristische Zeichen (30), das die Position des Geschwindigkeitsvektors angibt, anzuzeigen.

23. Vorrichtung gemäß Anspruch 22, dadurch gekennzeichnet, daß es einen Tonalarm (46) aufweist, der mit einer Zeitbasis vereinigt ist, die mit dem Sichtgerät (44) verbunden ist und der dann ausgelöst wird, wenn sich der Geschwindigkeitsvektor seit einer vorbestimmten Dauer unter der Navigationskurve befindet.

24. Vorrichtung gemäß einem der Ansprüche 22 oder 23, dadurch gekennzeichnet, daß das Sichtgerät (44) die Veränderungen der Navigationskurve (31) filtert und dem Piloten in fortschreitender Form die Änderungen der Navigationskurve (31) anzeigt.

## Claims

1. A method of assisting the piloting of an aircraft at low altitude, making it possible to detect the obstacles in relief which are dangerous for said aircraft in the field in front of the latter, characterized in that:

 - on the basis of the maneuvering capabilities of the aircraft, a hypothetical curve is calculated, related to said aircraft and associated with an optimal theoretical trajectory for clearing an obstacle in a vertical plane; and
 - in the field in front of the aircraft, the following steps are performed:

 a) all the obstacles situated in a search area are determined;
 b) the tops of said obstacles determined are compared with said hypothetical curve;
 c) that obstacle is defined as dangerous obstacle whose top is situated highest with respect to said hypothetical curve; and
 d) the coordinates of said top of this dangerous obstacle are communicated.

2. The method as claimed in claim 1, characterized in that the field in front of the aircraft is subdivided into angular sectors and in that, in each of said angular sectors, said steps a, b, c and d are performed.

3. The method as claimed in claim 2, characterized in that, in each of said angular sectors, the coordinates of a reference point situated at a predefined distance above the top of the dangerous obstacle are calculated, said predefined distance corresponding to the minimum desired height for overflying an obstacle.

4. The method as claimed in one of claims 1 to 3, characterized in that characteristic signs are superimposed on the image of the external landscape, which are arranged at the points in space corresponding to said determined coordinates.

5. The method as claimed in claim 3, characterized in that a piloting curve is determined, corresponding to a smoothed curve linking all said reference points.

6. The method as claimed in claim 5, characterized in that said piloting curve, as well as a characteristic sign indicating the position of the speed vector of the aircraft collimated at infinity are superimposed on the image of the external landscape.

7. The method as claimed in claim 5, characterized in that the central part of said piloting curve, including the points in space which are accessible to the aircraft with a predefined limit roll, are superimposed on the image of the external landscape.

8. The method as claimed in claim 5, characterized in that an offset piloting curve is calculated, determined in a way identical to said piloting curve, by using, in the calculation, modified coordinates of the dangerous obstacles, obtained in each case by the reduction according to the same ratio of the horizontal component of said coordinates.

9. The method as claimed in claim 5, characterized in that an auxiliary piloting curve is calculated, determined in a way identical to said piloting curve, by taking account of the obstacles situated at a longer distance from the aircraft than said dangerous obstacles.

10. The method as claimed in one of claims 5 to 9, characterized in that an optimal avoidance point is determined, corresponding to the point of the piloting curve towards which the aircraft has to steer in order to perform the optimal avoidance trajectory above the obstacles.

**11.** The method as claimed in claim 10, characterized in that, in order to determine said optimal avoidance point:

- for each reference point of the piloting curve, a compensated relative distance D satisfying the relationship D = h+kv is calculated, h being the horizontal distance and $\underline{v}$ the vertical distance between said reference point and the position of the speed vector, and $\underline{k}$ being a predefined coefficient;
- said calculated compensated relative distances are compared with each other; and
- the optimal avoidance point is determined as being the reference point the compensated relative distance of which is smallest.

**12.** The method as claimed in either of claims 10 and 11, characterized in that a characteristic sign, arranged at said optimal avoidance point, is superimposed on the image of the external landscape.

**13.** The method as claimed in either of claims 10 and 11, characterized in that the coordinates of said optimal avoidance point are communicated to the automatic pilot of the aircraft, in order to perform automatic avoidance.

**14.** The method as claimed in one of claims 1 to 13, characterized in that said hypothetical curve consists of a straight-line part, of length P, parallel to the speed vector of the aircraft and of a circular arc, of radius R, depending on the maneuvering capabilities of the aircraft, for pitch-up and pitch-down, in the vertical plane.

**15.** The method as claimed in claim 14, characterized in that the length P of said straight-line part is proportional to the speed of the aircraft.

**16.** The method as claimed in claim 14, characterized in that the radius R of said circular arc satisfies the relationship R = Rc+Rp, with Rc the pitch-up limit radius, dependent on the pitch-up limit load factor, and Rp the pitch-down limit radius, dependent on the pitch-down limit load factor.

**17.** The method as claimed in claim 16, characterized in that, as pitch-up limit load factor, a fixed value is taken which the aircraft is capable of having throughout the flight envelope.

**18.** The method as claimed in claim 16, characterized in that, as pitch-up limit load factor, predefined values are used varying as a function of the speed of the aircraft.

**19.** The method as claimed in claim 16, characterized in that said pitch-up limit load factor is determined on the basis of the temperature, of the pressure, of the mass and of the speed of the aircraft.

**20.** The method as claimed in claim 14, characterized in that, in each angular sector, said search area is limited to a distance L from the aircraft, satisfying the relationship L = P+R.

**21.** The method as claimed in one of claims 5 to 7, characterized in that a characteristic sign arranged at the point of said piloting curve through which said aircraft will pass while keeping its current roll is superimposed on the image of the external landscape.

**22.** A device for implementing the method specified under one of claims 1 to 21, characterized in that it includes:

- a rangefinder sensor intended to measure the direction and the distance of all the obstacles situated in the various search areas;
- a computer linked to said rangefinder sensor calculating said hypothetical curve on the basis of recorded data, defining the dangerous obstacles, and capable of calculating the coordinates of the tops of these dangerous obstacles, the coordinates of the reference points and said piloting curve; and
- a visual display device linked to said computer, capable of presenting to the pilot of the aircraft, in a fashion superimposed on the external landscape or on the image of the latter, the characteristic signs of said coordinates, said piloting curve, as well as the characteristic sign indicating the position of the speed vector.

**23.** The device as claimed in claim 22, characterized in that it includes an audible alarm, which is associated with a time base, which is linked to said visual display device and which is triggered when said speed vector is below said piloting curve for a predefined duration.

**24.** The device as claimed in either of claims 22 and 23, characterized in that said visual display device filters the variations in the piloting curve and presents to the pilot, progressively, the alterations in said piloting curve.

FIG.1A

FIG.1B

FIG.1C

FIG.2

EP 0 652 544 B1

FIG.3

FIG.4

FIG.5

FIG.6